# EUROPEAN PATENT APPLICATION

(11) **EP 4 841 956 A1**
(43) Date of publication of application: **18.11.2026**
(21) Application number: 25175794.4
(22) Date of filing: 12.05.2025
(51) Int. Cl.: H04L 47/2416, H04L 47/32, H04W 28/02, H04W 28/12

(54) **METHODS, APPARATUSES AND COMPUTER PROGRAMS FOR USER EQUIPMENT AND FOR A NETWORK ENTITY**

(71) Applicant: Deutsche Telekom AG, 53113 Bonn (DE)
(72) Inventor: ZINGLER, Olaf, 53227 Bonn (DE); KLATT, Axel, 50999 Köln (DE)
(74) Representative: 2SPL Patentanwälte PartG mbB

(57) **Abstract**

Provided are methods, apparatuses and computer programs for user equipment and for a network entity. The method (10) for the UE (200; 300) comprises communicating (12) first data of a first category with a first lower delay tolerance in the mobile communication system (500; 600) and communicating (14) second data of a second category with a second higher delay tolerance in the mobile communication system (500; 600). The method (10) further comprises receiving (16) a data traffic control indication from an access node of the mobile communication system (500; 600) and delaying (18) communication of the second data based on the data traffic control indication.

## Description

### Field

The present disclosure relates to methods, apparatuses and computer programs for user equipment and for a network entity, more particularly, but not exclusively to a concept for effective load control in a mobile communication system by delaying delay tolerant traffic.

### Background

Load management in mobile communication systems is a critical function to ensure efficient utilization of network resources and maintain service quality. As user demand fluctuates throughout the day, network operators must dynamically allocate bandwidth, power, and other resources to prevent congestion and service degradation. Techniques such as load balancing, where traffic is distributed evenly across available base stations, and admission control, which regulates the number of users allowed to access the network, play vital roles in this process. Advanced algorithms also monitor real-time traffic patterns and predict potential overload scenarios, enabling preemptive actions like offloading traffic to less congested cells or networks.

Additionally, modern mobile networks leverage technologies like carrier aggregation, beamforming, and small cell deployment to enhance load management capabilities. Carrier aggregation combines multiple frequency bands to increase available bandwidth, while beamforming directs radio signals more precisely to reduce interference and improve capacity. Small cells, which are low-power base stations, help to offload traffic from macro cells in dense urban areas, improving overall network performance. The adoption of artificial intelligence and machine learning further refines load management by enabling predictive analytics and automated decision-making, ensuring that mobile communication systems can adapt to varying load conditions and provide consistent, high-quality service to users.

There are some situations in which temporary network overloads may occur. For example, during soccer games, concerts or after midnight on New Year's Eve traffic peaks occur. Typically load control mechanisms in a network may then prioritize users depending on their subscription, whether they are roaming or not or based on their service type. For example, emergency calls are prioritized. Deprioritized users may then experience delayed service or even outage (admission denied) resulting in a reduce grade of service experience.

### Summary

Examples are based on the finding that different traffic categories with different delay tolerances exist. Typically, data communicated between the infrastructure of a mobile communication system and user equipment (UE) is a mix of different traffic categories of different services and applications. It is a further finding that a significant amount of data traffic communicated can tolerate delays, such as backup services for data stored at the UE (e.g. pictures, videos, or other personal data) and updates (e.g. for applications or operating systems). In a high network load scenario such delay tolerant data traffic may be delayed, e.g. postponed to a later point in time to save or free up network resources, which can be used for delay intolerant data. In other words, it is a finding of examples that an overall user experience can be improved by shifting delay tolerant traffic to free resources for delay intolerant data in an overload situation.

An example relates to a method for UE of a mobile communication system. The method comprises communicating first data of a first category with a first lower delay tolerance in the mobile communication system and communicating second data of a second category with a second higher delay tolerance in the mobile communication system. The method further comprises receiving a data traffic control indication (DTCI) from an access node of the mobile communication system and delaying communication of the second data based on the data traffic control indication. Thereby, the network is enabled to delay data traffic that can tolerate time shifts. Delaying such traffic may increase communication capacities for delay intolerant traffic that is more relevant for user experiences.

In examples the DTCI may refer to uplink data communication, downlink data communication, both uplink and downlink data communication, or the data traffic control indication may comprise different indications for uplink and downlink data. That way, examples may enable flexibility with respect to a signaling load generated by the DTCI and with respect to the control granularity made available. For example, the DTCI comprises a single-bit indicator indicating whether the communication of the second data shall be delayed or not delayed. In some examples such indication may be even sent only if a delay is desired. That way, no signaling capacity may be consumed if no delaying is desired by the network. In other examples the data traffic control indication comprises more than a single bit to indicate delay requirements for the first category, the second category, or multiple categories. That way, the network is enabled to introduce different delays for different categories of data or even for different categories of UEs. The network load control is then enabled to fine tune the delay of different data categories and adapt the delaying to the load situation (which may also distinguish network loads per traffic category).

There are different options for transmitting/receiving the DTCI. For example, the DTCI is received on a broadcast control channel and therewith potentially by all UEs in a cell. Therewith all UEs may apply the DTCI unless the DTCI also provides indications that only a subset of the UEs of a cell are addressed (e.g. based on their subscription or services). Additionally or alternatively, a dedicated control channel from the access node may be used to receive the DTCI at the UE. That way, DTCls may be provided to UEs individually enabling the network to selectively apply the delay for the traffic of a certain category at the UEs.

In examples the first data (lower delay tolerance) may be foreground data and the second data (higher delay tolerance) may be background data. The foreground data is data that is more relevant for the user experience than the background data. For example, conversational data are foreground data and backup data are background data. Therewith, the load can be shaped towards higher capacities for foreground data and towards better user experiences. In examples the method may further comprise assigning the first and second categories to the first and second data based on one or more applications executed by the UE. Examples may therefore enable one or more applications of the UE to categorize the data and therewith enable category-based traffic shaping using the DTCI. Additionally, the method may comprise receiving information about a validity time of the DTCI and delaying the communication of the second data during the validity time. For example, the second data may be delayed for certain time (e.g. an enlarged transmission widow) or suspended to a certain level (e.g. a low data rate or even completely) during the validity time. After the validity time has expired the UE may read or receive an updated DTCI if desired. For example, the method then comprises updating the DTCI after the validity time. That way, the network may be enabled to control how often a UE needs to decode a broadcast channel because of the DTCI. By choosing a longer validity time such decoding need may be reduced compared to choosing a shorter validity time.

Examples also provide a method for a network entity controlling one or more access nodes of a mobile communication system. The method comprises communicating first data of a first category with a first lower delay tolerance with UE in the mobile communication system and communicating second data of a second category with a second higher delay tolerance with the UE in the mobile communication system. The method also includes determining a data traffic control indication (DTCI) based on a load situation in the mobile communication system and transmitting the DTCI from an access node of the mobile communication system to the UE to trigger the UE to delay communication of the second data. The network is therewith enabled to use the DTCI for load control in the mobile communication system.

As outlined before, in some examples the DTCI may indicate a suppression level for at least the second category. The suppression level may be predefined for at least the second category. In further examples different suppression levels may be defined per one or more traffic categories to enable enhanced load control. In line with the above, the method for the network entity may include determining information about a validity time of the DTCI and transmitting the information about the validity time of the data traffic control indication to the UE. Therewith, the network may control decoding needs or suppression time and levels at the UEs. The method at the network entity may further comprise determining different validity times for different DTCIs transmitted to different UEs. This mechanism may further enable load control and traffic fine tuning in examples.

Another example is an apparatus for user equipment of a mobile communication system. The apparatus comprises one or more interfaces configured to communicate in the mobile communication system and one or more processing devices configured to process signals communicated in the mobile communication system using the one or more interfaces. The one or more processing devices are further configured to perform one of the methods for the UE as described herein. Another example is a UE comprising the apparatus.

Yet another example is an apparatus for a network entity of a mobile communication system. The apparatus comprises one or more interfaces configured to communicate in the mobile communication system and one or more processing devices configured to process signals communicated in the mobile communication system using the one or more interfaces. The one or more processing devices are further configured to perform one of the methods for the network entity as described herein. Another example is a network entity comprising the apparatus.

A system comprising an example of a UE and an example of a network entity is yet another example. A further example is a computer program having a program code for performing one of the methods described herein, when the computer program is executed on a computer, a processor, or a programmable hardware component.

### Brief description of the Figures

Some examples of apparatuses, methods, and/or computer programs will be described in the following by way of example only, and with reference to the accompanying figures, in which
Fig. 1 shows a block diagram of an example of a method for user equipment of a mobile communication system;
Fig. 2 depicts a block diagram of an example of a method for a network entity of a mobile communication system;
Fig. 3 illustrates block diagrams of examples of an apparatus for a UE, a UE, an apparatus for a network entity, a network entity, and a mobile communication system; and
Fig. 4 shows another example of a mobile communication system.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

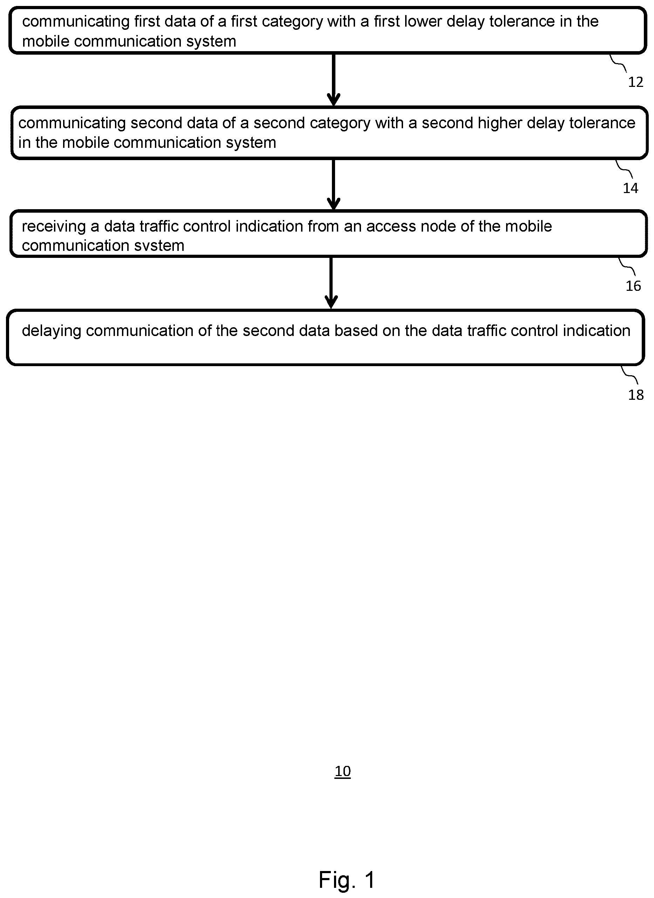

Fig. 1 shows a block diagram of an example of a method 10 for user equipment of a mobile communication system. The method 10 comprises communicating 12 first data of a first category with a first lower delay tolerance in the mobile communication system. The method 10 further comprises communicating 14 second data of a second category with a second higher delay tolerance in the mobile communication system. The method 10 for the UE further includes receiving 16 a data traffic control indication (DTCI) from an access node of the mobile communication system and delaying 18 communication of the second data based on the data traffic control indication.

Typically, data communicated in modern mobile communication systems can be differentiated in different categories. For example, conversational data like voice and video data is not very delay tolerant and if data cannot be delivered within a short time window, e.g. within less than 100ms, 250ms or 500ms, the data can be discarded because it is outdated already. In a mobile communication system these data have high latency requirements, e.g. data sessions or flows with high priorities are used for transporting such data. Image or video data that is to be uploaded into social media has a higher delay tolerance but still user expectations are that such data is available on the respective social media platform within a few seconds. Again, such data may be treated with a lower latency requirement and with lower priority. Backup data, such as backup of an operating system or personal user data typically has an even lower delay requirement, e.g. a couple minutes or hours. Such data can be treated with even lower priority.

For example, the 3GPP (3^{rd} Generation Partnership Project) systems classify traffic into four primary service categories - conversational, streaming, interactive, and background - based on their sensitivity to delay. Conversational traffic (e.g., voice and video calls) requires the most stringent latency constraints, with one-way mouth-to-ear delays targeted around 100ms to preserve natural dialogue flow. Streaming services, such as live video, can tolerate slightly higher delays - typically a few hundred milliseconds - to accommodate buffering and codec processing. Interactive applications (e.g., web browsing, online gaming) sit between these extremes, often operating acceptably with latencies up to around one second, balancing responsiveness with reliability. Background traffic - file downloads, emails, and bulk transfers - is the most delay-tolerant, as these services can buffer data and function effectively even when delays span several seconds without perceptible impact on user experience.

In LTE (Long Term Evolution) and subsequent 3GPP releases, these service categories are concretely mapped to QoS Class Identifiers (QCls), each defined by a Packet Delay Budget (PDB) that caps the maximum acceptable delay for a given bearer. For instance, QCI 1 (conversational voice) mandates a PDB of 100ms with a packet error loss rate of 10⁻², whereas QCI 3 (real-time gaming or V2X messaging) tightens this to 50ms with a 10⁻³ loss rate. Conversational video (QCI 2) allows up to 150ms, and non-conversational video (QCI 4) relaxes the budget to 300ms with a more stringent loss tolerance of 10⁻⁶. Default best-effort traffic under QCI 9 also permits 300ms of delay but maintains a 10⁻⁶ loss rate, ensuring non-GBR (non-Guaranteed Bit Rate) services still meet baseline performance. Later releases introduce even finer granularity - ranging from ultra-low 5ms budgets for discrete automation (QCI 85) to moderate 200ms budgets for mission-critical data (QCI 70) - to support emerging low-latency and mission-critical applications across heterogeneous 3GPP networks.

As outlined before, in the data mix communicated there can also be data of the second category with an even higher delay tolerance as budgeted by the standards. For example, backup data in the uplink or also update data in the downlink may even tolerate delays of several minutes or hours. The DTCI can then be used to introduce delays for the second data that allow resolving or overcoming load peaks in the mobile communication system. For example, the delay introduced to the second data on the basis of the DTCI may be in the order of minutes or hours, which may enable transmission of the second data after a load peak or at a later location at which the network is not as overloaded. The delay introduced for the second data may also be in the order of seconds thereby allowing the network to schedule resources for transmission of said data in a wider time window, which enables a more uniform utilization of transmission resources over time to avoid congestion or service/admission denial. Depending on the scenario delaying the second data may enable a better overall grade of service than having to abandon service due to overload.

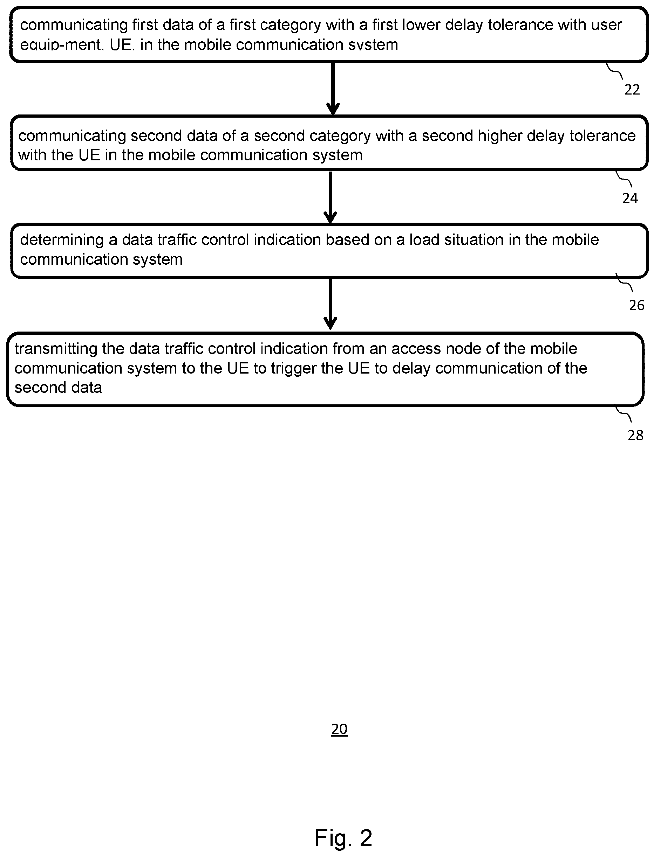

Fig. 2 depicts a block diagram of an example of a corresponding method 20 for a network entity of a mobile communication system. The method 20 comprises communicating 22 first data of a first category with a first lower delay tolerance with user equipment, UE, in the mobile communication system and communicating 24 second data of a second category with a second higher delay tolerance with the UE in the mobile communication system. The method 20 for the network entity further comprises determining 26 a data traffic control indication based on a load situation in the mobile communication system and transmitting 28 the data traffic control indication from an access node of the mobile communication system to the UE to trigger the UE to delay communication of the second data.

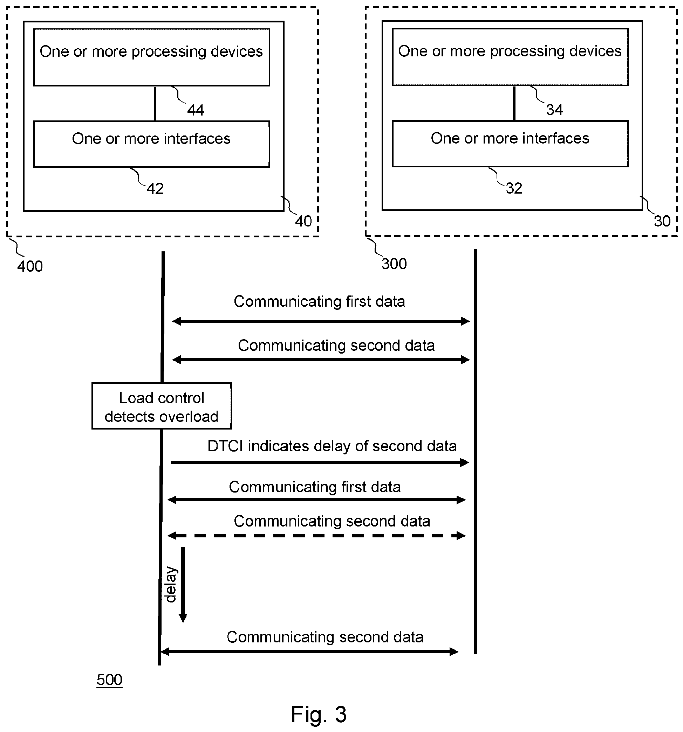

Fig. 3 illustrates block diagrams of examples of an apparatus 30 for a UE 300, a UE 300, an apparatus 40 for a network entity 400, a network entity 400, and a mobile communication system 500. The apparatus 30 for the UE 300 comprises one or more (radio) interfaces 32, which are configured to communicate in the mobile communication system 500. The one or more interfaces 32 are coupled to one or more processing devices 34. The one or more processing devices 34 are configured to process signals communicated in the mobile communication system 500 using the one or more interfaces 32. The one or more processing devices 34 are further configured to perform one of the methods 10 as described herein. Fig. 3 further illustrates an example of a UE 300 comprising the apparatus 30. The UE 300 is shown in dotted lines as it is optional from the perspective of the apparatus 30.

The apparatus 40 for the network entity 400 of the mobile communication system 500 comprises one or more interfaces 42, which are configured to communicate in the mobile communication system 500. The one or more interfaces 42 are coupled to one or more processing devices 44. The one or more processing devices 44 are configured to process signals communicated in the mobile communication system 500 using the one or more interfaces 42. The one or more processing devices 44 are further configured to perform one of the methods 20 as described herein. Fig. 3 further illustrates an example of a network entity 400 comprising the apparatus 40. The network entity 400 is shown in dotted lines as it is optional from the perspective of the apparatus 40. As further shown in Fig. 3 the mobile communication system 500 comprises at least one example of the UE 300 and at least one example of the network entity 400.

The one or more interfaces 32, 42 may serve as interface for communicating in the communication system 500. The one or more interfaces 32, 42 may correspond to one or more inputs and/or outputs for receiving and/or transmitting information, which may be in digital (bit) values or analog according to a specified code or protocol, within a module, between modules or between modules of different entities. For example, an interface may comprise interface circuitry configured to receive and/or transmit information. In examples an interface may comprise any means for obtaining, receiving, transmitting or providing analog or digital signals or information, e.g., any connector, contact, pin, register, input port, output port, conductor, lane, etc., which allows providing or obtaining a signal or information. The one or more interfaces 32, 42 may be configured to communicate (transmit, receive, or both) in a wireless and/or wired manner and it may be configured to communicate, i.e., transmit and/or receive signals, information with further internal or external components. The one or more interfaces 32, 42 or the apparatuses 30, 40 may comprise further components to enable communication in a (mobile) communication system or network, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, one or more antennas, etc. For example, the respective one or more interfaces 32, 42 may enable radio communication with UEs and communication between base stations, which can be directly and/or indirectly, wired and/or wireless, respectively.

The one or more processing devices 34, 44 may be implemented using one or more processing units, one or more circuitries, any means for processing, such as a processor, a computer or a programmable hardware component being operable with accordingly adapted software. In other words, the described function of the one or more processing devices 34, 44 may as well be implemented in software, which is then executed on one or more programmable hardware components. Such hardware components may comprise a general-purpose processor, a Digital Signal Processor (DSP), a micro-controller, etc.

A network entity, e.g. a base station or a network function controlling one or more base station, may generate one or more cells of a cellular system and/or the network entity may be in the fixed or stationary part of the network or system. A network entity may correspond to a remote radio head, a transmission point, an access point, a macro cell, a small cell, a micro cell, a pico cell, a femto cell, a metro cell etc. A network entity can be a wireless interface or control one or more wireless interfaces of a wired network, which enables transmission and reception of radio signals to a communication device. Such a radio signal may comply with radio signals as, for example, standardized by 3GPP or, generally, in line with one or more of the systems described herein. Thus, a network entity may be a base station and may correspond to, a NodeB, an eNodeB, an ngNB, a gNB, a BTS (Base Transceiver Station), an access point, etc. In case of a moving implementation in a satellite, an airplane, etc. the link towards a core network of the communication system may also be implemented in a wireless manner.

The mobile communication system 500 may hence be cellular. The term cell refers to a coverage area of radio services provided by a transmission point, a remote unit, a remote head, a remote radio head, communication device, network entity or a NodeB, an eNodeB, an ngNB, a gNB, a beam, a satellite, respectively. The terms cell and base station may be used synonymously, a base station may generate multiple cells and it may be implemented in a high-altitude platform, a plane, a drone, a satellite, as a ground station, etc. A wireless communication device, e.g., the communication device or UE, can be registered or associated with at least one cell (e.g., the network entity), e.g., it can be associated to a cell such that data can be exchanged between the network and the mobile in the coverage area of the associated cell using a dedicated channel, connection or link.

The mobile communication system 500 may further comprise a core network, with multiple further network nodes/entities. A network node/entity may hence be a server, router or processing component in the mobile communication system 500. One specific network node may also be configured to carry out the above-described method 20 and may comprise the above-described apparatus 40.

In general, the UE may be a communication device that is capable of communicating wire-lessly. In particular, however, the communication device may be a mobile communication device, e.g., a communication device that is suitable for being carried around by a user. For example, the communication device may be a User Terminal (UT) or User Equipment (UE) within the meaning of the respective communication standards being used for mobile communication. For example, the communication device may be a mobile phone, such as a smartphone, or another type of mobile communication device, such as a smartwatch, a laptop computer, a tablet computer, or autonomous augmented-reality glasses. The communication device may be in a vehicle, a car, a bus, a truck, a construction and/or agricultural machinery, a train, an airplane, a boat, a ship, a cruise ship, an Internet of Things (IoT) device, a logistics application, etc. For example, the communication device and the network entity may be configured to communicate in a cellular mobile communication system. Accordingly, the communication device and the network entity may be configured to communicate in a cellular mobile communication system, for example in a Sub-6GHz-based cellular mobile communication system (covering frequency bands between 400 MHz and, in the meantime, 7 GHz), in a mmWave-based cellular mobile communication system (covering frequency bands between 24 GHz and 71 GHz) or in the so-called mid-bands (covering frequency bands between 7 GHz and 24 GHz). For example, the communication device and the network entity may be configured to communicate in a mobile communication system/cellular mobile communication system.

In general, the mobile communication system 500 may, for example, correspond to one of the Third Generation Partnership Project (3GPP)-standardized mobile communication networks, where the term mobile communication system is used synonymously to mobile communication network. The mobile communication system may correspond to, for example, a 6^{th} Generation system (6G), a 5th Generation system (5G), a New Radio (NR) system, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

As further shown in Fig. 3 underneath the block diagram in the sequence chart the UE and Network entity may actively communicate first and second data. At some point the load control mechanism, which can be implemented in the network entity 400 or in any control entity of the mobile communication system 500, detects an overload situation in the cell that is used for the communication with UE 300. The network entity 400 then transmits the DTCI to the UE 300. Upon reception of the DTCI the UE delays the second data. Delaying the second data may be implemented by simply pausing or suppressing transmission of the second data at the moment and postponing transmission of the second data to a later time, e.g. 1 minute, 10 minutes, 30 minutes 1 hour, 2 hours, 3 hours, etc. The time shift may be predefined or indicated by the DTCI. For example, the second data may be transmitted when the DTCI provides an according indication (e.g. is not transmitted anymore or explicitly). Another option for delaying the second data is reducing the data rate for the second data. In this case the second data is not delayed en bloc or entirely, but the data rate and therewith the transmission resources consumed by the second data are reduced. This is indicated by the dotted arrow in Fig. 3. In some examples the DTCI may provide for multiple suppression options for the second data, e.g. full, partial, or no suppression. For example, in case data transmission of the second data has already started, i.e. some data session is already ongoing, when the DTCI is received, there can be different possibilities on how to best handle the second data. One option is pausing the second data and restarting later, which might be at the cost of retransmissions of already transmitted data at the later point in time and having to reestablish higher layer protocol contexts. Another option is continuing with reduced data rate (to keep higher layer protocol contexts alive) but save transmission capacity for other data.

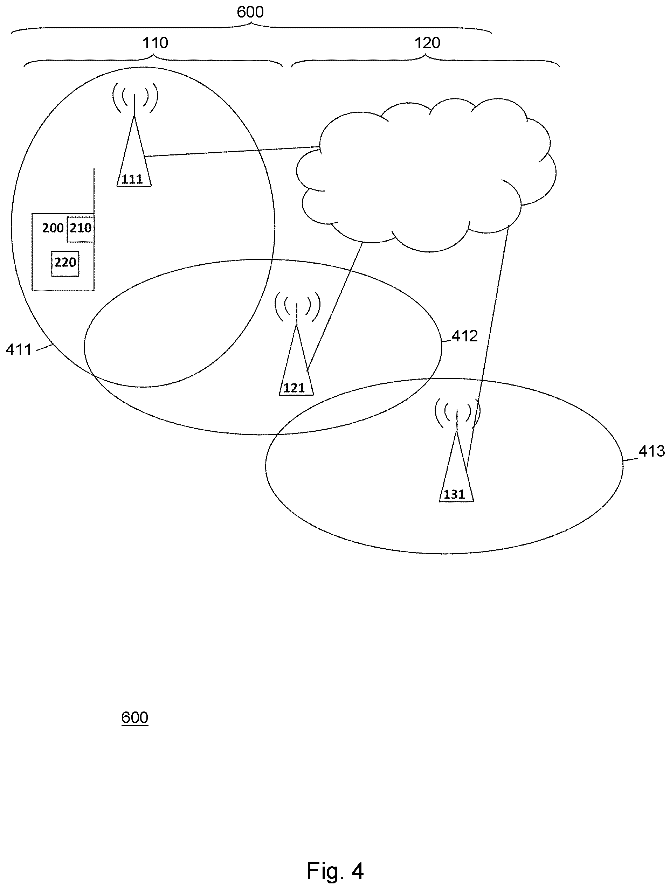

Fig. 4 shows another example of a mobile communication system 600. Fig. 4 illustrates an access network 110 with three base stations 111, 121, and 131, which operate three radio cells 411, 412, and 413. The base stations are controlled by core network 120.There are local traffic situations in the mobile communication network 600, where hundreds of user equipment's 200 are connected to a single base station entity like 111 or more and transmit their data via radio interface 210 in uplink direction toward core network 120 at the same time and located in the same radio cell 411. Such traffic situations appear for example during a football game in stadiums or during music events, like outdoor concerts with thousands of visitors. In such case the mobile radio cell in the base station entity 111 is heavily loaded, means during longer time the radio resources, such as the radio resource blocks, are occupied. As these physical transmission resources of the radio interface 210 are typically shared from all connected user equipment, the user experience of a single user will be limited, e.g. in the achievable transmission data rate or initial response time to get "free" radio resources to start his transmission.

In general, user traffic in mobile communication networks 600 can be distinguished between foreground and background traffic. Foreground traffic contains typically time sensitive traffic, means from application or user point of view this kind of data - in the uplink direction - has to be transmitted immediately to the target, e.g. videos, messages or pictures from the upper mentioned events via social media towards their communities of followers. In contrast to foreground traffic also background traffic exists. This kind of data traffic has to arrive the target as well, but not immediately. In uplink direction for example background traffic of the user equipment 200 can be a (cloud-) backup service of taken pictures or videos. Typically, this kind of background traffic is mostly not time sensitive related to the time of arrival at the destination / cloud.

Analyses of the amount and kind of transmitted uplink traffic have shown, that during such events also a significant amount of background traffic has to be transmitted via the mobile communication network 100. Even worse, these transmissions also typically happen during peak traffic situations and compete also with radio resource requirements of foreground traffic transmissions, which are more time sensitive than the background traffic. In addition, transmissions in uplink direction are often received not only from the serving base station like 111, but also from surrounding base stations like 121 and lead to unwanted uplink interference and reduce the quality of radio links from other user equipment's being connected to this interfered base station 121.

Examples provide computer programs, methods and apparatuses of efficient uplink resource control in a cellular network. User data traffic (in uplink or downlink) can be distinguished into time-sensitive (low delay tolerance as for the first category) and not-time sensitive (higher delay tolerance as for the second category) traffic. The differentiation of the user data traffic can be done based on a general classification of UE-applications (means all user data traffic of one UE-application may be managed in the context of example with the same classification) or in a way that the user data traffic has to be distinguished and marked by the UE-application individually, means that a UE-application has to mark its produced user data traffic according to predefined traffic-classifications in the context of the proposed invention, such as fore- and background traffic.

On the other hand, also existing methods from the operation system (OS) 220 in the user equipment 200 can be reused to differentiate data traffic produced by the user equipment 200 into fore- and background traffics, e.g. as used from OS 220 to manage different stages of the UE battery save mode. In this case a mapping or grouping of the traffic differentiation performed from the OS 220 into the defined classes of the proposed invention has to be realized. Another option to consider is the status of the application on the UE. E.g. if an application of the UE is displayed in the virtual foreground, meaning the user interacts or looks at the graphical representation of that application, then it is considered foreground. If it is however in the virtual background, i.e. the user is busy with other applications, then it may be considered background. This may even apply to a video session. If the video display is in the virtual background, so the user cannot see it, the respective downlink transmission may be delayed until the user can actually see the video image again. This may happen while associated audio data is transmitted continuously. In this particular case, intermediate video data may even be discarded, which can even happen automatically using other mechanisms when data is outdated. The downlink transmission may then be resumed, when the user brings the video call back to the foreground. So, in some examples, the first data is foreground data and the second data is background data. The method 10 for the UE may then comprise assigning the first and second categories to the first and second data using one or more applications or an operating system executed by the UE.

At least in some examples it is intended to allow the operation system 220 in the user equipment 200 to steer the data transmission according to the radio resource allocation situation or load situation in the covering radio cell 411 or base station entity 111. As this information is only available in the base station entity 111, a downlink control message has to be extended with an additional new information element (DTCI) to convey such information to the user equipment.

To enable the operation system 220 in the user equipment 200 to distinguish its traffic, the base station entity 111 may inform the user equipment's in its radio cell 411 about the resource/load situation via a new load indicator in the respective downlink signalling message. The DTCI can refer to uplink data communication, downlink data communication, both uplink and downlink data communication, or the DTCI comprises different indications for uplink and downlink data. Furthermore, the DTCI may comprise a single bit indicator indicating whether the communication of the second data shall be delayed or not delayed. Alternatively, the DTCI may comprise more than a single bit to indicate delay requirements for the first category, the second category, or multiple categories.

Generally, in examples the DTCI may be received on a broadcast control channel and/or a dedicated control channel from the access node. A basic and initial example of the proposed concept is to transmit a load indication message (DTCI) of the uplink resource situation of the base station entity 111 on the broadcast control channel (BCCH), e.g. in a system information block (SIB), which can be received and be read from UE 200. This uplink load indication can be a simply binary low/high-switch in the system information block to enable the user equipment 200 to use this information to delay the transmission of not time sensitive uplink traffic until the status of the uplink load indicator changes back to the "low" status.

It is well known that this procedure can only be used for few UEs as they typically do not read permanently the system information block of their coverage radio cell. Hence the procedure could be extended with a validity time indication in the system information block SIB or for the DTCI. In turn this means as long as this time is valid the last uplink load information should be used from operation system 220 of the user equipment 200. If the validity time indication expires, the user equipment 200 should read the respective system information block again, interpret the uplink load indication before uplink resources for uplink data transmission, such as background traffic of the user equipment 200, can be requested by the UE 200 from the base station entity 111.

Uplink load indication (DTCI) and validity time indication should be configurable for each connected radio cell, such as cell 411, of the base station entity 111. The content of both information fields should be set according to the resource allocation and traffic situation in the base station entity/radio cell.

Whenever uplink load indication changes to "low", the operation system should use this trigger to restart the transmission of the suspended/delayed uplink background traffic. Such changes can happen due to changes of the load situation in the current serving cell 411 or when the user equipment moves into other cells with load indication = low, e.g. such as cells 412 or 413 in Fig. 4.

So, in general, at the UE the method 10 may include receiving information about a validity time of the DTCI and delaying the communication of the second data during the validity time. The delaying may be for the validity time or for a different time delay, which is applied during the validity time. The method 10 may further comprise updating the data traffic control indication after the validity time. The validity time may likewise apply for uplink, downlink or for both. Different DTCI and validity timers may be used for uplink and downlink.

Further examples may make use of one or more of the following enhancements. To catch even more UEs the uplink load indication and validity time indication can in addition or alternatively be transmitted on a dedicated control channel message, individually for each user equipment 200 in connected mode, preferably at the end of a data session between base station entity 111 and user equipment 200. That way, the network can control the number of UEs, to which the DTCI is transmitted. Thereby a fine tuning is enabled.

The management of the uplink load indication and validity time indication will be done normally in the base station entity 111 itself, based on a configurable rule system. However, it is also possible to set these both parameters from a higher instance, like the operation and maintenance (O&M) centre, which may comprise the network entity.

In such a case the higher management instance can also consider the UL load situation in surrounding base station entities 111 with cell 412 and 131 with cell 413 of the "heavy" loaded base station entity 111 and transmit DTCI also in signalling messages of the surrounding base stations, as a kind of UL resource protection. Setting the uplink load indicator "high" and validity timer can then reduce the amount of background traffic transmissions in slightly larger area than the pure radio cell 411.

In general, the reverse situation in uplink appears also in downlink direction. Situations appear that during an event the user equipment's 200 perform updates of their installed applications (app) from app-stores or even perform updates of the entire operation system 220. Also, this kind of downlink traffic can be classified as background traffic and in case of heavy loaded base station entities 111 requested from user equipment 200 later from the related servers, e.g. in internet. Consequently, also for the downlink direction a new field with downlink load indication (and the potential timer) makes sense to be introduced.

Observations of different events and traffic situation have shown that the traffic load differs often in time between uplink and downlink. Hence, at least in some examples, it is proposed to use dedicated load indicators for downlink and uplink direction, even if also the use of a general single indicator might be possible (better than nothing).

Different forms and formats of the load indicator DTCI are possible, for example:
- As mentioned above a simple binary load indication with two stages (e.g. high/low).
- As a signalling optimisation to improve signalling efficiency, only the status "high" may be transmitted and any kind of no transmission of the load indicator would mean "low" (still binary).
- A more flexible option would be to use a three-state mode (high/medium/low). The basic idea behind a third state is to decouple the transmission of delayed background traffic a bit from the UEs in case of a change in the two-stage procedure (from high to low) and to avoid new traffic overloads of the radio resources.
- Alternatively to a two or three stage indicator (multiple bits) also a load indication with a number could be used, e.g. to indicate the load situation as percentage of allocated resources of the link.
- No restrictions on the signalling and coding of the load indication may apply, as any signalling or coding may be used to signal DTCI in examples.

Another example of the method would not rely on using the broadcast channel and the respective SIBs to perform the traffic control to the UE, but use any dedicated downlink message, such a RRC (Radio resource Control) Connection Setup, RRC Radio Bearer configuration/reconfiguration or any other radio resource configuration message. In this case prior transmission of the UE 200 would be required, which should be OK also in congested situations as the subsequent downlink message could enable control of the background traffic on the UE 200.

Some examples may even use a matrix (load per traffic-class/category). Even more flexible, especially if more than two types of traffic categories are distinguished by the operation system 220 in the user equipment 200, is a model of different kind of traffic-classes and related load information. For example,

| Load / traffic class | Class A | Class B | Class C |
|---|---|---|---|
| | **Low** | Low | Low |
| | Medium | **Medium** | Medium |
| | High | High | **High** |

| Load / traffic class | Class A | Class B | Class C |
|---|---|---|---|
| | X % | Y % | Z % |

In the following one of multiple conceivable load definitions is provided. The most relevant measure of the load within the context of examples may be the ratio of the used physical resources to the maximum of the available physical resources from the radio interface. Typically, in enumerator (used resources) and denominator (maximum available) resource blocks will be counted, like in LTE- or 5G-systems. Hence, the load indicator may be individually calculated and transmitted towards the UEs, as 200, per radio frequency band and radio cell of each base station entity, like 111 and the radio cell 411.

The maximum of available physical radio resources is typically related to the bandwidth of the radio cell. However, in cases where for a dedicated class of traffic only a lower number or a part of the physical resources is configured and allowed to use, this reduced value is used in the denominator. The enumerator which contains the used physical resources is often calculated for a configurable time frame, e.g. as sliding window. In case that the load indicator can be managed individually for defined kind of traffic classes (see above), the used physical resources for each traffic class should be taken into account. Load thresholds in the base station entities can be used to map the calculated radio resource ratio into the proposed load indicator (see above).

Summarizing, examples may provide a method in a cellular mobile network, receiving downlink signaling information on a common broadcast control channel (BCH) or on a dedicated control channel (DCCH) where the downlink signaling information (DTCI) indicates that background traffic (such as for example picture sync into a cloud storage) in uplink direction of a UE in said cellular mobile network is either grated or suppressed. In further examples the downlink signaling information (DTCI) indicating a suppression of background traffic in uplink direction contains a suppression timer indication defining how long the suppression on the background traffic in uplink direction is active. The downlink signaling information (DTCI) may indicate a suppression level of background traffic in uplink direction, which maps to a set of different background traffic characteristics, which are suppressed individually based on the configured suppression rules in the UE. The DTCI may indicate a suppression level for at least the second category. The suppression level may be predefined for at least the second category. In examples, method 20 may further comprise determining information about a validity time of the DTCI at the network entity, e.g. based on the load situation in one or more cells and transmitting the information about the validity time of the DTCI to the UE. Furthermore, the method 20 may comprise determining different validity times for different data traffic control indications transmitted to different UEs.

Examples also provide a UE in a cellular mobile network, receiving downlink signaling information on a common broadcast control channel (BCH) or on a dedicated control channel (DCCH), where the downlink signaling information (DTCI) indicates that background traffic (such as, for example, picture synchronization into a cloud storage) in uplink direction in said cellular mobile network is either grated or suppressed for the UE.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method (10) for user equipment (200; 300), UE, of a mobile communication system (500; 600), the method (10) comprising
communicating (12) first data of a first category with a first lower delay tolerance in the mobile communication system (500; 600);
communicating (14) second data of a second category with a second higher delay tolerance in the mobile communication system (500; 600);
receiving (16) a data traffic control indication from an access node of the mobile communication system (500; 600);
delaying (18) communication of the second data based on the data traffic control indication.

2. The method (10) of claim 1, wherein the data traffic control indication refers to uplink data communication, downlink data communication, both uplink and downlink data communication, or wherein the data traffic control indication comprises different indications for uplink and downlink data.

3. The method (10) of one of the claims 1 or 2, wherein the data traffic control indication comprises a single bit indicator indicating whether the communication of the second data shall be delayed or not delayed, or wherein the data traffic control indication comprises more than a single bit to indicate delay requirements for the first category, the second category, or multiple categories.

4. The method (10) of one of the claims 1 to 3, wherein the data traffic control indication is received on a broadcast control channel or a dedicated control channel from the access node.

5. The method (10) of one of the claims 1 to 4, wherein the first data is foreground data and wherein the second data is background data.

6. The method (10) of one of the claims 1 to 5, further comprising assigning the first and second categories to the first and second data based on one or more applications executed by the UE (200; 300).

7. The method (10) of one of the claims 1 to 6, further comprising receiving information about a validity time of the data traffic control indication and delaying the communication of the second data during the validity time.

8. The method (10) of claim 7, updating the data traffic control indication after the validity time.

9. A method (20) for a network entity (400) controlling one or more access nodes of a mobile communication system (500; 600), the method (20) comprising
communicating (22) first data of a first category with a first lower delay tolerance with user equipment (200; 300), UE, in the mobile communication system (500; 600);
communicating (24) second data of a second category with a second higher delay tolerance with the UE (200; 300) in the mobile communication system (500; 600);
determining (26) a data traffic control indication based on a load situation in the mobile communication system (500; 600); and
transmitting (28) the data traffic control indication from an access node of the mobile communication system (500; 600) to the UE (200; 300) to trigger the UE (200; 300) to delay communication of the second data.

10. The method (20) of claim 9, wherein the data traffic control indication indicates a suppression level for at least the second category, wherein the suppression level is predefined for at least the second category.

11. The method (20) of one of the claims 9 or 10, further comprising determining information about a validity time of the data traffic control indication and transmitting the information about the validity time of the data traffic control indication to the UE (200; 300).

12. The method (20) of claim 11, further comprising determining different validity times for different data traffic control indications transmitted to different UEs.

13. An apparatus (30) for user equipment (200; 300), UE, of a mobile communication system (500; 600), the apparatus (30) comprising
one or more interfaces (32) configured to communicate in the mobile communication system (500; 600); and
one or more signal processing devices (34) configured to process signals communicated in the mobile communication system (500; 600) using the one or more interfaces (32), wherein the one or more signal processing devices (34) are further configured to perform one of the methods (10) of claims 1 to 8.

14. An apparatus (40) for a network entity (400) of a mobile communication system (500; 600), the apparatus (40) comprising
one or more interfaces (42) configured to communicate in the mobile communication system (500; 600); and
one or more signal processing devices (44) configured to process signals communicated in the mobile communication system (500; 600) using the one or more interfaces (42), wherein the one or more signal processing devices (44) are further configured to perform one of the methods (20) of claims 9 to 12.

15. A computer program having a program code for performing one of the methods (10; 20) of one of the claims 1 to 12, when the computer program is executed on a computer, a processor, or a programmable hardware component.

## Amended claims

### Amended claims in accordance with Rule 137(2) EPC.

1. A method (10) for user equipment (200; 300), UE, of a mobile communication system (500; 600), the method (10) comprising
actively communicating (12) first data of a first category with a first lower delay tolerance in the mobile communication system (500; 600);
actively communicating (14) second data of a second category with a second higher delay tolerance in the mobile communication system (500; 600);
receiving (16) a data traffic control indication from an access node of the mobile communication system (500; 600);
delaying (18) an ongoing communication by pausing or reducing a data rate of the second data based on the data traffic control indication.

2. The method (10) of claim 1, wherein the data traffic control indication refers to uplink data communication, downlink data communication, both uplink and downlink data communication, or wherein the data traffic control indication comprises different indications for uplink and downlink data.

3. The method (10) of one of the claims 1 or 2, wherein the data traffic control indication comprises a single bit indicator indicating whether the communication of the second data shall be delayed or not delayed, or wherein the data traffic control indication comprises more than a single bit to indicate delay requirements for the first category, the second category, or multiple categories.

4. The method (10) of one of the claims 1 to 3, wherein the data traffic control indication is received on a broadcast control channel or a dedicated control channel from the access node.

5. The method (10) of one of the claims 1 to 4, wherein the first data is foreground data and wherein the second data is background data.

6. The method (10) of one of the claims 1 to 5, further comprising assigning the first and second categories to the first and second data based on one or more applications executed by the UE (200; 300).

7. The method (10) of one of the claims 1 to 6, further comprising receiving information about a validity time of the data traffic control indication and delaying the communication of the second data during the validity time.

8. The method (10) of claim 7, updating the data traffic control indication after the validity time.

9. A method (20) for a network entity (400) controlling one or more access nodes of a mobile communication system (500; 600), the method (20) comprising
actively communicating (22) first data of a first category with a first lower delay tolerance with user equipment (200; 300), UE, in the mobile communication system (500; 600);
actively communicating (24) second data of a second category with a second higher delay tolerance with the UE (200; 300) in the mobile communication system (500; 600);
determining (26) a data traffic control indication based on a load situation in the mobile communication system (500; 600); and
transmitting (28) the data traffic control indication from an access node of the mobile communication system (500; 600) to the UE (200; 300) to trigger the UE (200; 300) to delay an ongoing communication by pausing or reducing a data rate of the second data.

10. The method (20) of claim 9, wherein the data traffic control indication indicates a suppression level for at least the second category, wherein the suppression level is predefined for at least the second category.

11. The method (20) of one of the claims 9 or 10, further comprising determining information about a validity time of the data traffic control indication and transmitting the information about the validity time of the data traffic control indication to the UE (200; 300).

12. The method (20) of claim 11, further comprising determining different validity times for different data traffic control indications transmitted to different UEs.

13. An apparatus (30) for user equipment (200; 300), UE, of a mobile communication system (500; 600), the apparatus (30) comprising
one or more interfaces (32) configured to communicate in the mobile communication system (500; 600); and
one or more signal processing devices (34) configured to process signals communicated in the mobile communication system (500; 600) using the one or more interfaces (32), wherein the one or more signal processing devices (34) are further configured to perform one of the methods (10) of claims 1 to 8.

14. An apparatus (40) for a network entity (400) of a mobile communication system (500; 600), the apparatus (40) comprising
one or more interfaces (42) configured to communicate in the mobile communication system (500; 600); and
one or more signal processing devices (44) configured to process signals communicated in the mobile communication system (500; 600) using the one or more interfaces (42), wherein the one or more signal processing devices (44) are further configured to perform one of the methods (20) of claims 9 to 12.

15. A computer program having a program code for performing one of the methods (10; 20) of one of the claims 1 to 12, when the computer program is executed on a computer, a processor, or a programmable hardware component.
